# EUROPÄISCHE PATENTANMELDUNG

(11) **EP 1 961 835 A1**
(43) Veröffentlichungstag der Anmeldung: **27.08.2008**
(21) Anmeldenummer: 07003458.2
(22) Anmeldetag: 20.02.2007
(51) Int. Cl.: C23C 16/453, A61C 3/00

(54) **Vorrichtung zur Modifikation der Oberflächenaktivität von insbesondere medizinischen Instrumenten**

(71) Anmelder: W & H Dentalwerk Bürmoos GmbH, 5111 Bürmoos (AT)
(72) Erfinder: Kölndorfer, Jürgen, 1100 Wien (AT); Cordes, Matthias, 2372 Giesshübl (AT); Diem, Alexander, 5102 Anthering (AT); Rauchenzauner, Stephan, 5110 Oberndorf bei Salzburg (AT)

(57) **Zusammenfassung**

Die vorliegende Erfindung betrifft eine Vorrichtung zur Modifikation der Oberflächenaktivität (1) von insbesondere medizinischen Instrumenten (3) mittels Flammenpyrolyse, so dass zumindest ein Teil der Oberfläche (2, 2A - 2D) der Instrumente (3) hydrophile Eigenschaften oder eine gute Benetzbarkeit aufweist. Die Vorrichtung (1) umfasst zumindest eine Beflammungsvorrichtung (4) zur Erzeugung einer Flamme (19) mit einem oxidierenden Flammenbereich (5) und einem reduzierenden Flammenbereich (6) und eine Vorrichtung (7) zur Beflammung des zu beflammenden Oberflächenteils (2, 2A - 2D) im Wesentlichen mit dem oxidierenden Flammenbereich (5). Die Vorrichtung (1) gewährleistet ein Überstreichen der zu beflammenden Oberfläche (2, 2A - 2D) im Wesentlichen nur durch den oxidierenden Teil der Flamme, ohne dass der Anwender dies überwachen oder selbst herbeiführen muss.

## Beschreibung

Die vorliegende Erfindung betrifft eine Vorrichtung zur Modifikation der Oberflächenaktivität von insbesondere medizinischen Instrumenten, so dass zumindest ein Teil der Oberfläche der Instrumente hydrophile Eigenschaften oder eine gute Benetzbarkeit aufweist.

Aus dem Stand der Technik, zum Beispiel der DE 10 2004 053 708 A1, sind Verfahren bekannt, bei denen unter Verwendung von Brennervorrichtungen die Oberflächen von Substraten, Gegenständen, Instrumenten etc. flammenpyrolytisch behandelt werden, wodurch eine Modifikation der Oberflächenaktivität hervorgerufen wird. Es entsteht insbesondere eine Silizium und Sauerstoff aufweisende Schicht oder Beschichtung, die durch Adsorption von Wasserdampf Si-OH-Bindungen aufweist. Diese oftmals als Siliziumoxid (SiOₓ) - Schicht bezeichneten Schichten oder Beschichtungen weisen hydrophile Eigenschaften und insbesondere eine sehr gute Benetzbarkeit durch Wasser oder Wasserdampf auf.

Substrate mit derartigen Siliziumoxidschichten können daher unter anderem in vorteilhafter Weise in Umgebungen mit hoher Luftfeuchtigkeit oder mit durch Zerstäubung entstandenen Flüssigkeitströpfchen eingesetzt werden, wobei die Bildung von Wassertropfen auf der Substratoberfläche zum Beispiel durch Kondensation unterbunden oder zumindest verzögert wird. Insbesondere bei medizinischen Anwendungen, bei denen Flüssigkeiten oder Flüssigkeitssprays unter anderem zum Kühlen der Behandlungsstelle oder eines Operationswerkzeugs, zum Freispülen der Behandlungsstelle oder zum Behandeln von Gewebe verwendet werden, können Siliziumoxidschichten sehr vorteilhaft eingesetzt werden. Die Siliziumschichten können insbesondere auf Spiegeln, Lichtleitern, Beleuchtungsvorrichtungen, optischen Elementen wie zum Beispiel Linsen oder Abdeck- oder Schutzvorrichtungen aufgebracht sein, so dass sich auf diesen Instrumenten anstelle von Wassertropfen ein dünner, durchgehender Wasserfilm bildet, der die optischen Eigenschaften, zum Beispiel die Reflexionseigenschaften eines Spiegels oder die Lichtabgabe einer Beleuchtungsvorrichtung, weniger negativ beeinflusst als auf der Instrumentenoberfläche abgeschiedene Wassertropfen.

Die Anmelderin stellte überraschenderweise fest, dass die durch die Flammenpyrolyse hervorgerufene Modifikation der Oberflächenaktivität nicht dauerhaft ist. Insbesondere bei erhöhter oder wiederkehrender mechanischer oder chemischer Belastung der mit der Beschichtung versehenen Substrate oder Instrumente nahmen die Benetzbarkeit und die hydrophilen Eigenschaften sehr rasch ab. Mechanische oder chemische Belastungen können bei medizinischen Instrumenten zum Beispiel durch Reinigungs-, Desinfektions- oder Sterilisationsprozesse oder durch Kontakt der Instrumente mit anderen medizinischen Instrumenten oder Gegenständen verursacht werden. Ein bei seiner Herstellung mit einer Siliziumoxidschicht versehener Dentalspiegel verliert zum Beispiel schon nach wenigen Anwendungen, d.h. oftmals innerhalb eines Tages, seine hydrophilen Eigenschaften.

Der vorliegenden Erfindung liegt daher die Aufgabe zugrunde, für die Anwender von in ihrer Oberflächenaktivität modifizierten Oberflächen, Substraten, Gegenständen und Instrumenten, insbesondere von medizinischen Instrumenten, eine Lösung für die angeführten Nachteile zu schaffen, so dass sie insbesondere ihre in der Oberflächenaktivität modifizierten Substrate, Gegenstände und Instrumente mechanischen oder chemischen Belastungen aussetzen können.

Diese Aufgabe wird gemäß der vorliegenden Erfindung durch eine Vorrichtung zur Modifikation der Oberflächenaktivität von zumindest Teilen von Oberflächen, Substraten, Gegenständen und Instrumenten, insbesondere von medizinischen Instrumenten mit den Merkmalen des Anspruchs 1 gelöst. Besonders vorteilhafte Ausführungsformen sind in den Unteransprüchen angeführt.

Erfindungsgemäß wird vorgeschlagen, dem Anwender eine einfach zu bedienende, kompakte, sichere und vorzugsweise tragbare Vorrichtung zur Modifikation der Oberflächenaktivität von zumindest Teilen von Oberflächen, insbesondere von zumindest Teilen von Oberflächen medizinischer Instrumente mittels Flammenpyrolyse zur Verfügung zu stellen. Der Anwender, zum Beispiel ein Arzt oder eine Arzthelferin, kann damit an seinen Instrumenten wiederholt die Modifikation der Oberflächenaktivität eigenständig, sicher und ohne großen Aufwand durchführen und somit die verringerte oder verlorene Hydrophilie und Benetzbarkeit wieder herstellen.

Die Vorrichtung zur Modifikation der Oberflächenaktivität besteht aus einer Beflammungsvorrichtung zur Erzeugung einer Flamme mit einem oxidierenden und einem reduzierenden Flammenbereich und aus einer Vorrichtung zur Beflammung des zu beflammenden Oberflächenteils im Wesentlichen mit dem oxidierenden Flammenbereich. Der Vorteil der Vorrichtung zur Modifikation der Oberflächenaktivität liegt insbesondere darin, dass durch die Vorrichtung zur Beflammung des zu beflammenden Oberflächenteils im Wesentlichen mit dem oxidierenden Flammenbereich gewährleistet wird, dass die Oberfläche, deren Oberflächenaktivität modifiziert werden soll, im Wesentlichen nur durch den oxidierenden Teil der Flamme überstrichen wird, ohne dass der Anwender dies überwachen oder selbst herbeiführen muss. Das Überstreichen der Oberfläche mit dem oxidierenden Teil der Flamme ist für das Verfahren essentiell, da nur dadurch die Modifikation der Oberflächenaktivität, das heißt die Erhöhung der Hydrophilie oder der Benetzbarkeit der Oberfläche, erzielt werden kann.

Die Beflammungsvorrichtung umfasst einen oder mehrere Brenner, die bevorzugt länglich oder stabförmig ausgebildet sind. Jedem Brenner sind eine oder mehrere Düsen zugeordnet. Bevorzugt ist die Beflammungsvorrichtung so ausgebildet, dass sie eine langgezogene Flammezone oder Flammenfront erzeugt. Die Breite der Flammenzone bzw. Flammenfront beträgt in einem bevorzugten Ausführungsbeispiel etwa 1 cm bis zu etwa 15 cm. Dies wird zum Beispiel durch Aneinanderreihen mehrerer Stabbrenner erreicht. Die Ausbildung einer länglichen Flamme ist, wie weiter unten noch im Detail beschrieben, insbesondere bei der Modifikation von Oberflächen, die größer als die Flamme sind, von Vorteil.

Die Beflammungsvorrichtung ist mit einer Quelle für ein Brenngas, insbesondere Propangas, Butangas, Leuchtgas oder Erdgas verbunden. Die Brenngasquelle ist als Teil der Vorrichtung zur Modifikation der Oberflächenaktivität, zum Beispiel als fest integrierter Gastank mit einem Anschluss zum Nachfüllen von Brenngas, oder als auswechselbare, in eine Aufnahme der Vorrichtung zur Modifikation der Oberflächenaktivität lösbar einsetzbare Gaskartusche oder als externe Gasquelle, zum Beispiel als Gasbehälter, der über eine Gasleitung mit der Vorrichtung zur Modifikation der Oberflächenaktivität verbunden ist, ausgebildet. Das der Beflammungsvorrichtung zugeführte Brenngas vermischt sich beim Austritt aus der Beflammungsvorrichtung mit Luft zu einem Brennstoff-Luft-Gemisch, das sich entzündet und die Flamme bildet, die über die zu modifizierende Oberfläche streicht. Die Förderung des unter Druck stehenden Brenngases erfolgt durch dessen Eigendruck, so dass es nach Öffnen eines Sperrelements durch eine Verbindungsleitung eigenständig zur Beflammungsvorrichtung strömt. Alternativ wird die Förderung des Brenngases durch eine Fördereinrichtung bewirkt, zum Beispiel durch eine Pumpe.

Um das ausschließliche und gleichmäßige Überstreichen der zu beflammenden Oberfläche nur mit dem oxidierenden Teil der Flamme zusätzlich abzusichern, ist in einem ersten Ausführungsbeispiel eine Halte- oder Stützvorrichtung für die zu beflammende Oberfläche oder den zu beflammenden Oberflächenteil vorgesehen, so dass diese stabil in der Vorrichtung zur Modifikation der Oberfläche aufgenommen oder gelagert ist. Zumindest während des Beflammungsvorganges sind die Halte- oder Stützvorrichtung und die zu beflammende Oberfläche unbeweglich zueinander angeordnet, d.h. sie führen keine Bewegung relativ zueinander aus. Die Halte- oder Stützvorrichtung hält oder stützt den zu beflammenden Oberflächenteil direkt, es ist jedoch alternativ auch eine indirekte Fixierung möglich, so dass ein mit dem zu beflammenden Oberflächenteil verbundenes Bauelement, zum Beispiel das Griffelement eines Dentalspiegels, gehalten oder gestützt wird. Die Halte- oder Stützvorrichtung umfasst jede Art von Aufnahme, Halterung, Führung, Ausnehmung, Schlitz, Schulter, Vorsprung, Rücksprung, Träger, Wanne, Zange, Klemm-, Rast- oder Steckeinrichtungen. Sie ist gerade oder gebogen, fest oder flexibel, beweglich oder starr, ein- oder mehrteilig ausgeführt und hält, stützt, lagert, fixiert, führt etc. die zu beflammende Oberfläche direkt oder indirekt oder nimmt sie zumindest teilweise in sich auf.

In einem anderen Ausführungsbeispiel sind die Halte- oder Stützvorrichtung und / oder die Beflammungsvorrichtung relativ zueinander beweglich angeordnet. Dies ist insbesondere dann von Vorteil, wenn zum Beispiel die zu beflammenden Oberflächen schräge Bereiche oder Abschnitte mit schiefen Ebenen aufweisen oder verschiedene Instrumente unterschiedliche Durchmesser oder Dicken aufweisen, so dass die Gefahr besteht, dass der oxidierende Teil der Flamme nicht die gesamte Oberfläche überstreicht oder dass Instrumente aufgrund ihres zu geringen oder zu großen Durchmessers nicht mit dem oxidierenden Teil der Flamme beflammbar sind. Ist zumindest die Halte- oder Stützvorrichtung oder die Beflammungsvorrichtung relativ zu dem anderen Bauteil beweglich ausgebildet, so ist es möglich, den Abstand zwischen der Halte- oder Stützvorrichtung und der Beflammungsvorrichtung, insbesondere dem Brenner zu verändern und so auszuwählen, dass sich die Oberfläche oder das Instrument im oxidierenden Teil der Flamme befindet.

Durch das Vorsehen der Vorrichtung zur Beflammung des zu beflammenden Oberflächenteils im Wesentlichen mit dem oxidierenden Flammenbereich und insbesondere durch die bewegliche Anordnung der Halte- oder Stützvorrichtung und / oder der Beflammungsvorrichtung wird in vorteilhafter Weise auch erreicht, dass die Anzahl der Brenner gering gehalten werden kann, da unabhängig von der Beschaffenheit der zu beflammenden Oberfläche oder des Instruments sicher gestellt ist, dass der oxidierende Flammenbereich die gesamte zu beflammende Oberfläche überstreicht. Eine geringe Anzahl von Brennern ermöglicht wiederum eine kompakte, Platz sparende Ausgestaltung der Vorrichtung zur Modifikation der Oberfläche.

Die Bewegung der Halte- oder Stützvorrichtung und / oder der Beflammungsvorrichtung erfolgt in einer Ausführungsform manuell, zum Beispiel durch Verschieben. Dazu ist an der Vorrichtung zur Modifikation der Oberflächenaktivität zumindest eine Antriebseinheit vorgesehen, die ein oder mehrere Stellelemente, zum Beispiel einen Schieber oder eine Kurbel umfasst, die operativ mit der Halte- oder Stützvorrichtung und / oder der Beflammungsvorrichtung verbindbar oder verbunden sind. Da der Stellweg der Halte- oder Stützvorrichtung und / oder der Beflammungsvorrichtung vergleichsweise gering ist, kann die Antriebseinheit des Weiteren ein Getriebe aufweisen, das die groben Bewegungen des Anwenders in feine Bewegungen der Halte- oder Stützvorrichtung und / oder der Beflammungsvorrichtung übersetzt. Bevorzugt umfasst die Antriebseinheit zur Bewegung der Halte- oder Stützvorrichtung und / oder der Beflammungsvorrichtung jedoch zumindest einen motorischen Antrieb, insbesondere einen Elektro- oder Schrittmotor oder einen hydraulischen Antrieb, der operativ mit der Halte- oder Stützvorrichtung und / oder der Beflammungsvorrichtung verbindbar oder verbunden ist und diese bewegt.

Die Bestimmung der passenden Entfernung zwischen der Halte- oder Stützvorrichtung bzw. der zu beflammenden Oberfläche und der Beflammungsvorrichtung erfolgt entweder direkt visuell durch den Anwender, über einen oder mehrere Sensoren, zum Beispiel über Abstands- oder optische Sensoren, über Inkrementalgeber oder über Bildverarbeitungsvorrichtungen. Als Abstandssensoren werden zum Beispiel Ultraschallsensoren eingesetzt, die über die an der Halte- oder Stützvorrichtung bzw. der zu beflammenden Oberfläche reflektierten Schallwellen des von einer Ultraschallquelle abgegebenen Schalls und die Laufzeitverschiebung der Schallwellen den Abstand zwischen der zu beflammenden Oberfläche oder der Halte- oder Stützvorrichtung und einem Referenzort, zum Beispiel einem definierten Punkt auf dem Brenner der Beflammungsvorrichtung, ermitteln. Die Sensoren senden ihre Messsignale an eine mit ihnen verbundene Steuer- und / oder Regelvorrichtung, die die Messsignale empfängt und auswertet.

Umfasst die Antriebseinheit einen motorischen Antrieb, so ist dieser mit der Steuer- und / oder Regelvorrichtung verbunden bzw. ist als Teil der Steuer- und / oder Regelvorrichtung ausgebildet und wird durch die Steuer- und / oder Regelvorrichtung in Abhängigkeit der Werte der Messsignale des Sensors angesteuert oder geregelt, so dass die Relativbewegung zwischen der Halte- oder Stützvorrichtung und / oder der Beflammungsvorrichtung bzw. die Einstellung des Abstandes zwischen ihnen im Wesentlichen automatisch und ohne Zutun des Anwenders erfolgt. Zusätzlich oder alternativ aktiviert die Steuer- und / oder Regelvorrichtung eine Signalabgabevorrichtung zur insbesondere optischen oder akustischen Signalabgabe, so dass der Anwender erkennen kann, dass die passende Entfernung zwischen der Halte- oder Stützvorrichtung und der Beflammungsvorrichtung eingestellt ist.

In einem weiteren Ausführungsbeispiel umfasst die Vorrichtung zur Beflammung des zu beflammenden Oberflächenteils im Wesentlichen mit dem oxidierenden Flammenbereich zumindest einen Adapter oder Einsatz, über den die Festlegung der passenden Entfernung zwischen der zu beflammenden Oberfläche und der Beflammungsvorrichtung erfolgt. Der zumindest eine Adapter ist mit der zu beflammenden Oberfläche oder dem zu beflammenden Instrument lösbar verbindbar. Er ist zwischen der Beflammungsvorrichtung und der Halte- oder Stützvorrichtung anordenbar, insbesondere in die Halte- oder Stützvorrichtung einsetzbar oder mit dieser verbindbar. Bevorzugt sind mehrere unterschiedliche Adapter mit unterschiedlichen Abmessungen, zum Beispiel unterschiedlichen Wandstärken vorgesehen.

Abhängig von den Abmessungen, insbesondere der Dicke des zu beflammenden Instruments bzw. der zu beflammenden Oberfläche wählt der Anwender einen entsprechenden Adapter aus, verbindet das Instrument mit diesem Adapter und den Adapter mit der Halte- oder Stützvorrichtung. Der ausgewählte Adapter und das Instrument im Bereich der zu beflammenden Oberfläche sollen gemeinsam in etwa eine vorbestimmte, unabhängig von den Instrumentenabmessungen gleich bleibende Abmessung, zum Beispiel eine gemeinsame Dicke aufweisen. Derart wird in einfacher und vorteilhafter Weise erreicht, dass die zu beflammende Oberfläche unterschiedlicher Instrumente, wenn sie in der Halte- oder Stützvorrichtung eingesetzt ist, im Wesentlichen gleich weit von der Beflammungsvorrichtung entfernt und innerhalb der Reaktionszone der Vorrichtung zur Modifikation der Oberflächenaktivität angeordnet ist, ohne dass hierzu die Halte- oder Stützvorrichtung und / oder der Beflammungsvorrichtung beweglich ausgebildet sein müssen. Als Reaktionszone wird dabei jener Bereich bezeichnet, in den sich der oxidierende Teil der Flamme erstreckt und der sich zwischen der Halte- oder Stützvorrichtung und der Beflammungsvorrichtung befindet.

Alternativ ist der Adapter mit einem flexiblen, federnden oder verstellbaren Halteelement versehen, zum Beispiel einer Feder oder einer Gewindestange, das die zu beflammende Oberfläche, unabhängig von ihrer Wandstärke im Adapter an einer festgelegten Position fixiert. Wird der Adapter mit der Halte- oder Stützvorrichtung verbunden, so befindet sich die zu beflammende Oberfläche immer im Wesentlichen in gleich bleibender Entfernung von der Beflammungsvorrichtung.

In einem weiteren Ausführungsbeispiel umfasst die Vorrichtung zur Beflammung des zu beflammenden Oberflächenteils im Wesentlichen mit dem oxidierenden Flammenbereich eine Steuer- und / oder Regelvorrichtung, die unterschiedliche Elemente aufweisen kann oder mit unterschiedlichen Bauteilen verbindbar oder verbunden ist.

Die Steuer- und / oder Regelvorrichtung umfasst in einer ersten Ausführungsform eine Stelleinrichtung, insbesondere ein Durchfluss- oder Druckregelelement zur gleichmäßigen Brenngaszufuhr zur Beflammungsvorrichtung. Das Durchfluss- oder Druckregelelement ist bevorzugt als Regelventil ausgebildet, das zumindest teilweise in der Brenngasleitung, die die Beflammungsvorrichtung mit der Brenngasquelle verbindet, angeordnet ist und selbsttätig Druck- oder Volumenstromschwankungen ausgleicht, wodurch eine gleichmäßige Versorgung des Brenners der Beflammungsvorrichtung mit Brenngas und damit eine im Wesentlichen gleich bleibende Flammengröße mit einem in etwa gleich groß bleibenden oxidierenden Flammenbereich sicher gestellt wird.

In einer zweiten Ausführungsform weist die Steuer- und / oder Regelvorrichtung zumindest einen Sensor und eine mit dem Sensor verbindbare oder verbundene Auswerteinheit, zum Beispiel einen Mikrokontroller zur Verarbeitung eines vom Sensor erzeugbaren Sensorsignals und zur Abgabe eines Stellsignals an ein Stellglied auf. Es können unterschiedliche Sensoren zur Anwendung kommen, zum Beispiel ein Drucksensor zur Bestimmung des Brenngasdrucks in der Brenngasleitung, die die Beflammungsvorrichtung mit der Brenngasquelle verbindet. Der vom Drucksensor ermittelte Brenngasdruck wird von der Steuer- und / oder Regelvorrichtung im Weiteren mit einem vorgegebenen Solldruck verglichen. Weichen Ist- und Sollwert des Brenngasdrucks ab, so steuert oder regelt die Steuer- und / oder Regelvorrichtung das Stellglied, zum Beispiel ein Ventil in der Brenngasleitung auf den Sollwert. Damit ist wiederum eine im Wesentlichen gleich bleibende Flammengröße mit einem in etwa gleich groß bleibenden oxidierenden Flammenbereich sicher gestellt, unabhängig zum Beispiel von Schwankungen im Versorgungsdruck des Brenngases.

Alternativ wird der vom Drucksensor ermittelte Brenngasdruck oder die davon abgeleitete Flammengröße von der Steuer- und / oder Regelvorrichtung auf einer Anzeigeeinheit abgebildet. Der Anwender verändert in der Folge über ein mit der Steuer- und / oder Regelvorrichtung verbundenes Stellorgan, zum Beispiel einen Drehknopf den Sollwert für die Flammengröße oder den Brenngasdruck. Die Änderung des Brenngasdrucks erfolgt wie oben beschrieben über die Steuer- und / oder Regelvorrichtung und das damit verbundene Stellglied. Der Vorteil dieser Ausführungsform liegt darin, dass das Beflammen von Oberflächen mit unterschiedlichen Wandstärken oder Instrumenten mit unterschiedlichen Durchmessern möglich ist, ohne dabei die Halte- oder Stützvorrichtung oder die Beflammungsvorrichtung beweglich ausbilden zu müssen. Weist zum Beispiel eine zu beflammende Oberfläche eine große Wandstärke auf, so dass sie, sobald sie in die Halte- oder Stützvorrichtung eingesetzt ist, der Beflammungsvorrichtung zu nahe kommt und die Oberfläche nicht vom oxidierenden Flammenbereich überstrichen wird, so verändert der Anwender die Flammengröße entsprechend, so dass die Oberfläche vom oxidierenden Flammenbereich überstrichen wird.

In einer weiteren Ausführungsform ist als Stellglied eine manuell oder motorisch betriebene Antriebseinheit zum Bewegen der Halte- oder Stützvorrichtung und / oder zum Bewegen der Beflammungsvorrichtung vorgesehen, so dass nicht der Brenngasdruck verändert wird, sondern der Abstand zwischen der Halte- oder Stützvorrichtung bzw. der zu beflammenden Oberfläche und der Beflammungsvorrichtung. Die Bestimmung der passenden Entfernung erfolgt wie weiter oben schon beschrieben visuell durch den Anwender, über einen oder mehrere Sensoren, zum Beispiel über Abstands- oder optische Sensoren, oder über Bildverarbeitungsvorrichtungen.

Anstelle des Drucksensors ist zum Beispiel die Verwendung eines Temperatursensors oder eines optischen Sensors möglich, die aufgrund der unterschiedlichen Temperaturen bzw. Farbtemperaturen den oxidierenden und den reduzierenden Flammenbereich unterscheiden. In gleicher Weise wie für den Drucksensor beschrieben wird der Messwert des Temperatursensors oder des optischen Sensors von der Steuer- und / oder Regelvorrichtung zum Stellen eines Stellglieds, zum Beispiel eines Ventils in der Brenngasleitung oder einer Antriebseinheit oder zur Information des Anwenders auf einer Anzeige verwendet.

Ein weiteres Ausführungsbeispiel der Vorrichtung zur Modifikation der Oberflächenaktivität weist eine Zündvorrichtung zum Zünden der Flamme der Beflammungsvorrichtung auf, wobei die Zündvorrichtung bevorzugt so ausgebildet ist, dass die Zündung während oder nach dem Einbringen zumindest eines Teils der zu beflammenden Oberfläche in die Reaktionszone erfolgt. Der Vorteil dieses Ausführungsbeispiels liegt sowohl in der automatischen Zündung, so dass der Anwender sich um die Zündung der Flamme nicht kümmern muss, als auch im optimierten, geringen Brenngasverbrauch, da die Zündung der Flamme erst erfolgt, wenn die zu beflammende Oberfläche bereits zumindest teilweise in den Reaktionsraum eingebracht ist.

Die Auslösung der Zündvorrichtung erfolgt bevorzugt über einen Schalter oder einen Sensor. Als Sensor wird zum Beispiel ein Drucksensor verwendet, der an der Halte- oder Stützvorrichtung vorgesehen ist und der eine Veränderung des Drucks detektiert, wenn die zu beflammende Oberfläche in die Halte- oder Stützvorrichtung eingesetzt wird. Alternativ wird ein optischer Sensor verwendet, insbesondere ein Infrarotsensor, der zum Beispiel die Unterbrechung der von einer Strahlungsquelle abgegebenen Strahlung detektiert. Die Strahlung wird insbesondere in Richtung der Halte- oder Stützvorrichtung, in einen um die Halte- oder Stützvorrichtung vorgesehenen Raum, den die zu beflammende Oberfläche beim Einsetzen in die Halte- oder Stützvorrichtung durchsetzt, oder in eine Aufnahmeführung, in der die zu beflammende Oberfläche beim Einsetzen in die Halte- oder Stützvorrichtung geführt wird, abgegeben.

Wird ein Schalter verwendet, so ist die Halte- oder Stützvorrichtung bevorzugt beweglich ausgebildet, so dass beim Verbinden der zu beflammenden Oberfläche mit der Halte- oder Stützvorrichtung diese durch den Anwender bewegt, insbesondere verschoben wird und durch diese Verschiebung der Schalter zur Abgabe eines Schaltsignals angeregt wird. Eine Rückstellfeder bringt die Halte- oder Stützvorrichtung wieder in ihre Ausgangsposition.

Der Sensor oder der Schalter sind mit einer Steuer- und / oder Regelvorrichtung verbunden, die bei Empfang eines Sensor- oder Schaltsignals die Zündvorrichtung, die an der Beflammungsvorrichtung angebracht ist, aktiviert, so dass die Zündvorrichtung einen Funken erzeugt, der das an ihr vorbeiströmende Brenngas-Luft-Gemisch entzündet. Die Zündvorrichtung weist zum Beispiel einen über eine Stromquelle gespeisten Glühdraht oder ein Piezoelement zur Erzeugung eines Funkens auf.

Gemäß einem Ausführungsbeispiel umfasst die Vorrichtung zur Modifikation der Oberflächenaktivität eine Zeitschaltung zur zeitlichen Begrenzung der Beflammung des zu beflammenden Oberflächenteils auf ein vorgegebenes oder einstellbares Zeitintervall. Damit wird in vorteilhafter Weise sowohl Brenngas gespart als auch eine zu starke Erwärmung der zu beflammenden Oberfläche oder des Instruments verhindert. Der Anwender kann somit das Instrument möglichst schnell nach der Oberflächenmodifikation wieder verwenden, ohne dass die Gefahr besteht, dass er sich oder einen Patienten mit dem heißen Instrument verletzt.

Bevorzugt wird die Zeitschaltung gleichzeitig und automatisch mit der Zündung der Zündvorrichtung gestartet. Als Auslösesignal für die Zeitschaltung wird dabei in besonders bevorzugter Weise das Signal des Sensors oder Schalters verwendet werden, das zum Auslösen der Zündvorrichtung dient.

Nach Ablauf des Zeitintervalls unterbindet die Zeitschaltung bevorzugt die Brenngaszufuhr zur Beflammungsvorrichtung oder bewegt die beflammte Oberfläche aus der Flamme oder die Beflammungsvorrichtung vom Objekt weg. Dies erfolgt zum Beispiel durch schließen einer Stelleinrichtung, insbesondere eines Sperrventils in der Brenngasleitung oder durch Ansteuerung eines Antriebs, der mit der Halte- oder Stützvorrichtung und / oder mit der Beflammungsvorrichtung verbunden ist. Ist das Zeitintervall einstellbar, so ist an der Vorrichtung zur Modifikation der Oberflächenaktivität ein Stellorgan vorgesehen, über das der Anwender entweder mehrere vorgegebene Intervalle aussucht oder die Länge des Zeitintervalls einstellt.

Ein Problem bei der Modifikation der Oberflächenaktivität mittels Flammenpyrolyse liegt in der Erwärmung der zu beflammenden Oberfläche und gegebenenfalls auch daran anschließender Teile des Instruments, so dass die Gefahr besteht, dass der Anwender oder der Patient durch die erwärmten Oberflächen Verletzungen, insbesondere Verbrennungen erleidet. In einem Ausführungsbeispiel ist die Vorrichtung zur Modifikation der Oberflächenaktivität daher mit einer Schutzeinrichtung ausgestattet, die die Oberfläche nach der Beflammung erst nach Unterschreiten einer vorgegebenen oder einstellbaren Temperaturgrenze frei gibt oder aus der Vorrichtung zur Modifikation der Oberflächenaktivität entlässt, wobei die Schutzeinrichtung bevorzugt zeit- oder temperaturgesteuert ist.

Ist die Schutzeinrichtung zeitgesteuert, so läuft nach Ablauf des Zeitintervalls zur Beflammung der Oberfläche, bevorzugt unmittelbar anschließend an dieses Zeitintervall ein zweites Zeitintervall ab, so dass die Entnahme der beflammten Oberfläche erst nach Ende dieses zweiten Zeitintervall möglich ist. Der Ablauf der beiden Zeitintervalle wird durch zwei getrennte Zeitschaltungen oder durch eine gemeinsame Zeitschaltung überwacht. Ist die Schutzeinrichtung temperaturgesteuert so ist ein Temperatursensor vorgesehen, insbesondere ein Infrarot-Sensor, der die Temperatur der beflammten Oberfläche oder des Instruments bestimmt.

Die Schutzeinrichtung umfasst des Weiteren eine Anzeige, zum Beispiel eine Leuchtdiode oder ein Display, mit der dem Anwender signalisiert wird, das die Temperaturgrenze erreicht oder unterschritten wurde und dass er das Instrument entnehmen kann. Die Anzeige ist mit der Zeitschaltung oder über eine Steuer- und / oder Regelvorrichtung mit dem Temperatursensor verbunden und wird durch die Signale der Zeitschaltung bzw. des Temperatursensors aktiviert. Alternativ weist die Schutzeinrichtung eine Verriegelungsvorrichtung auf, zum Beispiel über einen Antrieb bewegliche Greif-, Halte- oder Klammerelemente, die das Instrument oder die zu beflammende Oberfläche nach dem Einbringen in die Vorrichtung zur Modifikation der Oberflächenaktivität fixieren. Der Antrieb ist wiederum direkt oder indirekt mit der Zeitschaltung bzw. dem Temperatursensor verbunden und wird durch von ihnen abgegebene Signale bei Erreichen oder Unterschreiten der Temperaturgrenze aktiviert, so dass die Verriegelungsvorrichtung das festgehaltene Instrument freigibt.

Ist die Temperaturgrenze einstellbar, so ist an der Vorrichtung zur Modifikation der Oberflächenaktivität ein Stellorgan vorgesehen, über das der Anwender die Temperaturgrenze festlegt.

In Versuchsreihen stellte die Anmelderin fest, dass die Verbesserung der hydrophilen Eigenschaften oder die Erhöhung der Benetzbarkeit der zu beflammenden Oberfläche durch die Zugabe von halbmetallorganischen oder metallorganischen Verbindungen in das Brenngas und durch ihre Ablagerung auf der beflammten Oberfläche zusätzlich unterstützt wird. In einem weiteren Ausführungsbeispiel ist die Vorrichtung zur Modifikation der Oberflächenaktivität, insbesondere die Beflammungsvorrichtung daher mit einer Quelle für zumindest eine (halb)metallorganischen Verbindung, insbesondere einer Silizium-, Titan- oder Aluminiumverbindung verbindbar oder verbunden.

Die Quelle für zumindest eine (halb)metallorganische Verbindung ist in einer ersten Ausführungsform außerhalb der Vorrichtung zur Modifikation der Oberflächenaktivität vorgesehen und ist mit dieser über einen Versorgungsschlauch verbunden, oder sie ist als separater, austauschbarer oder wieder befüllbarer Behälter in der Vorrichtung zur Modifikation der Oberflächenaktivität angeordnet. In beiden Fällen ist eine Fördereinrichtung, zum Beispiel eine peristaltische Pumpe oder eine Membranpumpe vorgesehen, die die (halb)metallorganische Verbindung zur Beflammungsvorrichtung, insbesondere in das Brenngas fördert. In einer bevorzugten Ausführungsform ist die (halb)metallorganische Verbindung schon im Brenngas enthalten, so dass ein Gemisch aus Brenngas und (halb)metallorganischer Verbindung vorliegt, das zur Beflammungsvorrichtung gefördert wird. Damit sind in vorteilhafter Weise kein eigener Behälter, keine zusätzliche Fördereinrichtung etc. für die (halb)metallorganische Verbindung notwendig.

Um die Handhabung der Vorrichtung zur Modifikation der Oberflächenaktivität in einer Arztpraxis oder in einem Labor weiter zu vereinfachen ist in einem Ausführungsbeispiel vorgesehen, die Vorrichtung zur Modifikation der Oberflächenaktivität auf einer Plattform anzuordnen oder ein die Vorrichtung zur Modifikation der Oberflächenaktivität zumindest teilweise umschließendes Gehäuse vorzusehen. Insbesondere das Gehäuse bietet auch einen zusätzlichen Schutz vor der offenen Flamme. Das Gehäuse ist bevorzugt als vollkommen geschlossenes Gehäuse ausgebildet, das zumindest eine Öffnung zum Einbringen der zu beflammenden Oberfläche in die Vorrichtung aufweist. Eine weitere Öffnung ist zum Austausch einer als Brenngasquelle verwendeten Brenngaskartusche vorgesehen.

Am Außenumfang des Gehäuses sind des Weiteren Anschlüsse an eine Brenngasquelle, an eine Stromversorgung oder an ein Kühlmedium, insbesondere an eine Druckluftquelle zum Kühlen des beflammten Instruments angebracht. Das Gehäuse weist ein oder mehrere Sichtfenster auf, um in das Innere der Vorrichtung zur Modifikation der Oberflächenaktivität einsehen zu können, insbesondere um den Reaktionsraum, die Beflammungsvorrichtung oder die Halte- oder Stützvorrichtung beobachten zu können.

Um die Vorrichtung zur Modifikation der Oberflächenaktivität möglichst klein, kompakt und leicht handhabbar zu machen, ist es vorteilhaft nur eine Beflammungsvorrichtung bzw. nur einen oder wenige Brenner, bevorzugt ein bis drei Brenner vorzusehen. Damit ist jedoch die Fläche, die beflammt werden kann, begrenzt, so dass bei größeren zu beflammenden Oberflächen oder Instrumenten die Gefahr besteht, dass nur ein Teil der Oberfläche oder des Instruments von der Flamme überstrichen wird.

Eine erste Möglichkeit die von der Beflammungsvorrichtung überstrichene Fläche zu variieren besteht darin, zumindest einen Brenner oder einen am Vorderende der Beflammungsvorrichtung anbringbaren Brennereinsatz lösbar auszugestalten, so dass Brenner oder Brennereinsätze mit unterschiedlichen Durchmessern für unterschiedliche Flammendurchmesser, zum Beispiel bis zu 50 mm zur Verfügung stehen.

Alternativ ist die Beflammungsvorrichtung derart ausgebildet, dass sie eine Flamme oder Flammenfront erzeugt, deren Breite zumindest etwa gleich ihrer Höhe ist. Dazu sind entweder mehrere Brenner und / oder mehrere Düsen an einem Brenner nebeneinander angeordnet oder die Öffnung der Beflammungsvorrichtung, der Brenner oder der Düsen, an denen das Brenngas austritt, ist länglich oder schlitzförmig ausgestaltet. Zusätzlich oder alternativ sind die Halte- oder Stützvorrichtung und / oder die Beflammungsvorrichtung relativ zueinander beweglich angeordnet und werden insbesondere durch eine Antriebseinheit bewegt. Die Bewegung verläuft dabei im Wesentlichen in einer Ebene parallel zur zu beflammende Oberfläche und umfasst eine kreisförmige Bewegung und / oder Hin- und Herbewegung.

Die Bewegung wird bevorzugt von einer Steuer- und / oder Regelvorrichtung, die die Antriebssignale an die Antriebseinheit abgibt, ausgelöst und überwacht. Die Bewegung wird entweder automatisch bei Betrieb der Vorrichtung zur Modifikation der Oberflächenaktivität durchgeführt und wird bevorzugt durch das Signal zum Auslösen der Zündvorrichtung gestartet. Alternativ wird die Bewegung nur gestartet, wenn die zu beflammende Oberfläche oder das Instrument eine bestimmte Größe überschreitet. Dies wird durch den Anwender festgestellt, der dann ein Stellorgan, zum Beispiel einen mit der Steuer- und / oder Regelvorrichtung verbundenen Taster drückt, so dass die Halte- oder Stützvorrichtung und / oder die Beflammungsvorrichtung in Bewegung versetzt werden.

Bevorzugt erkennt die Vorrichtung zur Modifikation der Oberflächenaktivität jedoch eigenständig, ob eine in die Vorrichtung eingebrachte Oberfläche so groß ist, dass eine Bewegung der Halte- oder Stützvorrichtung und / oder der Beflammungsvorrichtung notwendig ist. Dies wird zum Beispiel durch Sensoren, insbesondere durch Ultraschall- oder Infrarotsensoren ermittelt, die vor der Zündung der Flamme an der Oberfläche reflektierte Ultraschallwellen oder eine Unterbrechung von Infrarotstrahlung durch die Oberfläche detektieren und ein Signal an die Steuer- und / oder Regelvorrichtung abgeben.

Selbstverständlich muss auch während der Bewegung der Halte- oder Stützvorrichtung und / oder die Beflammungsvorrichtung gewährleistet sein, dass sich die zu beflammende Oberfläche im oxidierenden Flammenbereich befindet. Dies erfolgt, wie weiter oben schon beschrieben, zum Beispiel durch einen oder mehrere Sensoren, zum Beispiel über Abstands- oder optische Sensoren, oder über eine Bildverarbeitungsvorrichtung.

Die Erfindung wird nachfolgend anhand bevorzugter Ausführungsbeispiele und Bezug nehmend auf die beigefügten Zeichnungen erläutert:
Figur 1 zeigt eine schematische Darstellung eines Ausführungsbeispiels einer Vorrichtung zur Modifikation der Oberflächenaktivität mit einem zu beflammenden Instrument vor der Zündung der Flamme.
Figur 2 zeigt die Vorrichtung zur Modifikation der Oberflächenaktivität gemäß Figur 1 während des Beflammungsvorgangs.
Figur 3A und 3B zeigen eine schematische Darstellung eines ersten Ausführungsbeispiels eines Adapters zur Verwendung mit einer Vorrichtung zur Modifikation der Oberflächenaktivität.
Figur 4A und 4B zeigen eine schematische Darstellung eines zweiten Ausführungsbeispiels eines Adapters zur Verwendung mit einer Vorrichtung zur Modifikation der Oberflächenaktivität.

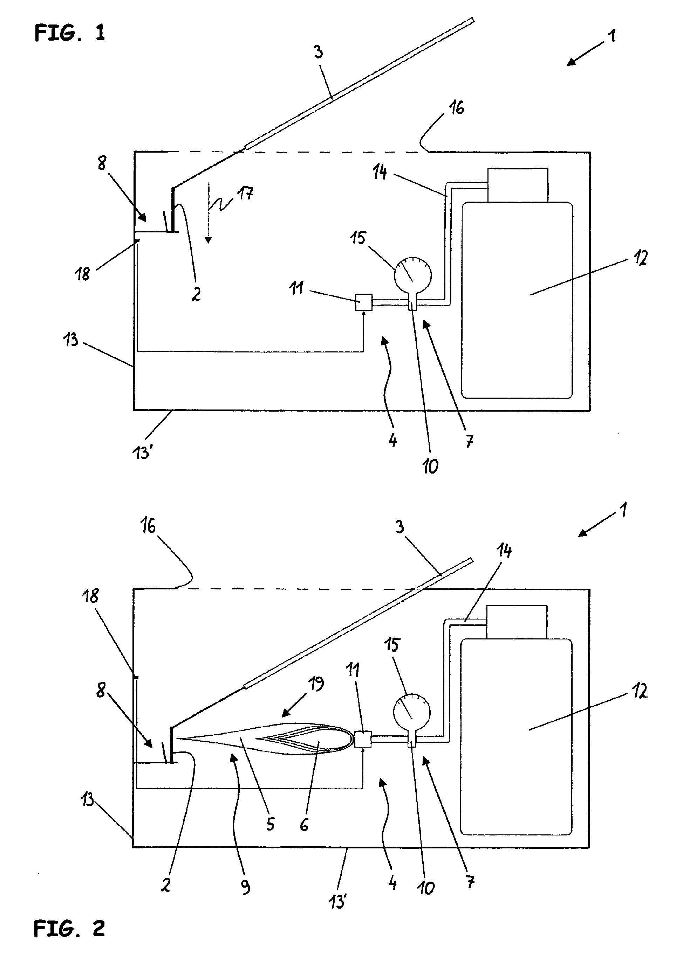

Die Figuren 1 und 2 zeigen eine Vorrichtung zur Modifikation der Oberflächenaktivität 1 in zwei unterschiedlichen Betriebszuständen, nämlich beim Einbringen einer zu beflammenden Oberfläche 2 eines medizinischen Geräts 3, hier eines Dentalspiegels, (Figur 1), bzw. beim Überstreichen der Oberfläche 2 durch die Flamme 19 (Figur 2).

Die Vorrichtung zur Modifikation der Oberflächenaktivität 1 wird durch ein Gehäuse 13 umschlossen, in dem alle weiteren dargestellten Bauteile der Vorrichtung 1 aufgenommen sind. In einer Kartusche oder einem Behälter 12 ist ein unter Druck stehendes Brenngas und bevorzugt auch eine (halb)metallorganische Verbindung, insbesondere eine Silizium-, Titan- oder Aluminiumverbindung gelagert. Eine Leitung 14 verbindet den Druckgasbehälter 12 mit der Beflammungsvorrichtung 4. In der Leitung 14 ist eine Stelleinrichtung 10 in Form eines Ventils vorgesehen, das als Vorrichtung 7 zur Beflammung des zu beflammenden Oberflächenteils 2 im Wesentlichen mit dem oxidierenden Flammenbereich 5 dient. Das Ventil regelt den Volumenstrom bzw. den Druck des Brenngases, so dass eine gleichmäßige Brenngaszufuhr zur Beflammungsvorrichtung 4 erfolgt, wodurch eine gleichmäßige Ausbildung des oxidierenden Flammenbereichs 5 und des reduzierenden Flammenbereichs 6 gewährleistet ist. An der Leitung 14 ist des Weiteren eine Druckmess- und Anzeigevorrichtung 15 für das Brenngas, zum Beispiel ein Manometer vorgesehen.

Am Gehäuse 13 ist eine Öffnung 16 vorgesehen, durch die die zu beflammende Oberfläche 2 oder zumindest ein Teil des zu beflammenden Instruments 3 in das Gehäuse 13 und die Vorrichtung zur Modifikation der Oberflächenaktivität 1 einführbar ist. Die Öffnung 16 kann durch einen Deckel oder eine Abdeckung verschließbar sein. Die zu beflammende Oberfläche 2 wird direkt oder indirekt in eine Halte- oder Stützvorrichtung 8 eingesetzt bzw. darauf abgestützt. Die Halte- oder Stützvorrichtung 8 ist beweglich ausgebildet, so dass sie zum Beispiel durch Ausüben von Druck durch den Anwender in Richtung des Gehäusebodens 13' verschoben werden kann, wie dies in Figur 1 durch den Pfeil 17 angedeutet ist.

Während des Verschiebevorgangs passieren die zu beflammende Oberfläche 2 und die Halte- oder Stützvorrichtung 8 einen Sensor oder Schalter, hier zu Beispiel einen selbst rückstellenden Kontaktschalter 18, der durch den Kontakt mit der Oberfläche 2 oder der Halte- oder Stützvorrichtung 8 aktiviert wird und ein Signal abgibt. Der Schalter 18 ist direkt oder indirekt über eine nicht dargestellte Steuer- und / oder Regelvorrichtung mit der Zündvorrichtung 11 verbunden, die durch das Schaltsignal zur Zündung des Brenngases angeregt wird. Das Schaltsignal wird bevorzugt auch für weitere Sicherheits-, Steuer- oder Überwachungsfunktionen verwendet, zum Beispiel als Startsignal für eine Zeitschaltung zur zeitlichen Begrenzung der Beflammung, als Auslösesignal für eine Relativbewegung zwischen der Halte- oder Stützvorrichtung 8 und / oder die Beflammungsvorrichtung 4 zum Überstreichen der gesamten zu beflammenden Oberfläche 2 oder als Signal zum Öffnen eines Sperrelements, zum Beispiel eines Sperrventils in der Leitung 14, so dass Brenngas zur Beflammungsvorrichtung 4 strömen kann.

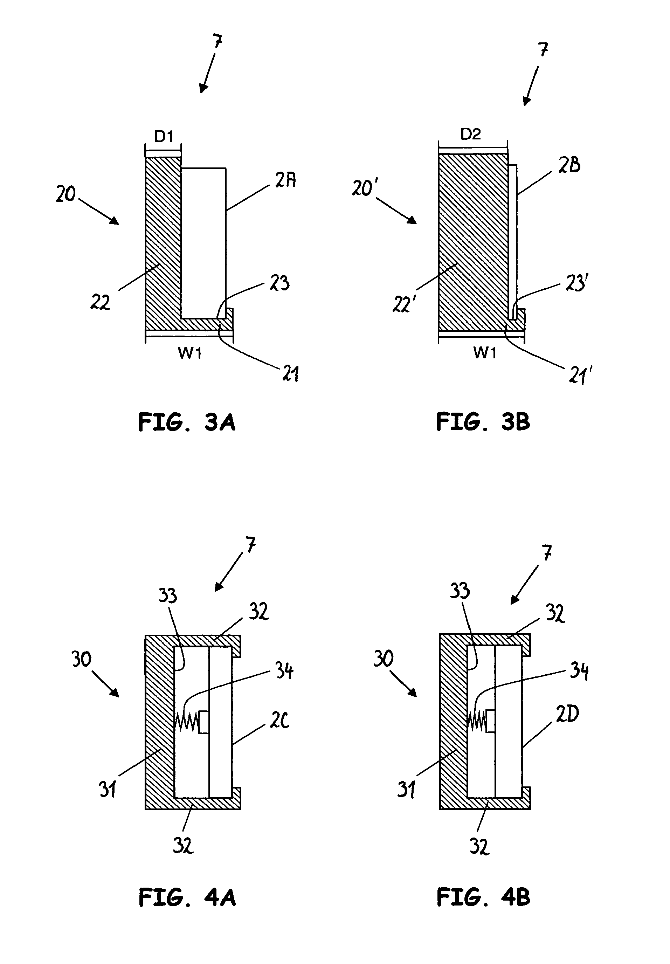

Die Figuren 3A, 3B, 4A, 4B zeigen Ausführungsformen von Adaptern 20, 20', 30, die als Vorrichtung 7 zur Beflammung des zu beflammenden Oberflächenteils 2A - 2D im Wesentlichen mit dem oxidierenden Flammenbereich 5 dienen. Die Adapter 20, 20', 30 ermöglichen für den Anwender eine einfache und rasche Festlegung der passenden Entfernung zwischen der zu beflammenden Oberfläche 2, 2A - 2D und der Beflammungsvorrichtung 4, bei der sicher gestellt ist, dass sich die zu beflammende Oberfläche 2, 2A-2D nach der Zündung der Flamme 19 in der Reaktionszone 9, d.h. im oxidierenden Flammenbereich 5 befindet. Die Adapter 20, 20', 30 sind mit der Halte- oder Stützvorrichtung 8 verbindbar, zum Beispiel auf diese steckbar oder darauf lagerbar. Sie sind des Weiteren mit der Halte- oder Stützvorrichtung 8 bewegbar und sind durch die in Zusammenhang mit Figur 1 beschriebene Verschiebung der Halte- oder Stützvorrichtung 8 zwischen der Beflammungsvorrichtung 4 und der Halte- oder Stützvorrichtung 8 anordenbar.

Die Adapter 20, 20' bestehen aus einer Basis 21, 21' zur Aufnahme oder Lagerung der zu beflammenden Oberfläche 2A, 2B und einem daran anschließenden Wand- oder Rückteil 22, 22'. Wie aus den Figuren 3A und 3B erkennbar ist, weisen die Rückteile 22, 22' unterschiedliche Wandstärken oder eine unterschiedliche Dicke D1, D2 auf, wohingegen die Basisflächen 21, 21' der beiden Adapter 20, 20' gleiche Abmessungen W1 aufweisen. Dem entsprechend sind die Aufnahmeflächen 23, 23' für die zu beflammenden Oberflächen 2A, 2B unterschiedlich breit, so dass jeweils nur eine zu beflammende Oberfläche 2A oder 2B mit einer bestimmten Dicke oder Wandstärke in die Aufnahmeflächen 23, 23' gestellt werden kann. Die zu beflammenden Oberflächen 2A, 2B befinden sich somit immer an der gleichen Position in Bezug auf die Basis 21, 21'.

Werden die Adapter 20, 20' mit der Halte- oder Stützvorrichtung 8 verbunden, wobei das Rückteil 22, 22' bevorzugt gegen einen Anschlag an der Halte- oder Stützvorrichtung 8 positioniert wird, so dass auch die Adapter 20, 20' im Wesentlichen immer die gleiche Position in der Halte- oder Stützvorrichtung 8 einnehmen, so ist damit sicher gestellt, dass die zu beflammende Oberfläche 2A oder 2B, unabhängig von ihrer Dicke immer an der selben Position zwischen der Beflammungsvorrichtung 4 und der Halte- oder Stützvorrichtung 8 angeordnet ist. Diese Position ist so festgelegt, dass sie sich in der Reaktionszone 9 befindet.

Die Figuren 4A, 4B zeigen eine alternative Adapter-Ausführungsform, bei der für unterschiedlich dicke Oberflächen 2C, 2D nur ein Adapter 30 benötigt wird. Der Adapter 30 weist eine Rückwand 31 und zwei Seitenwände 32 auf, die eine Aufnahme 33 für die zu beflammenden Oberflächen 2C, 2D umschließen. In der Aufnahme 33 ist ein Federelement 34 vorgesehen, das die zu beflammenden Oberflächen 2C, 2D in einer vorbestimmten, gleich bleibenden Position bezogen auf die Seitenwände 32 fixiert. Die Verbindung des Adapters 30 mit der Halte- oder Stützvorrichtung 8, seine Anordnung zwischen der Beflammungsvorrichtung 4 und der Halte- oder Stützvorrichtung 8 und damit die Positionierung der zu beflammende Oberfläche 2C oder 2D in der Reaktionszone entsprechen den Ausführungen zu den Adaptern 20, 20'. Anstelle des Federelements 34 können selbstverständlich auch andere bewegliche oder elastische Fixierelemente verwendet werden, zum Beispiel ein Gewindestab.

Die Erfindung ist nicht auf die die beschriebenen Ausführungsbeispiele beschränkt, sondern umfaßt alle Ausführungsmöglichkeiten, die das prinzipielle, sinngemäße Funktionsprinzip der Erfindung nicht verändern. Insbesondere sind die unterschiedlichen beschriebenen und dargestellten Ausführungsbeispiele frei kombinierbar, so dass die Vorrichtung zur Modifikation der Oberflächenaktivität sowohl als einfaches, im Wesentlichen mechanisch betriebenes Gerät oder als Gerät mit einer umfangreichen Sensorik und Steuerung ausgebildet sein kann. Sind mehrere Sensoren, Schalter, Stellorgane etc. vorgesehen, so ist bevorzugt eine gemeinsame Steuer- und / oder Regelvorrichtung, insbesondere ein Mikrokontroller vorgesehen, von der zumindest der Großteil der Signalverarbeitung, -weiterleitung, Ansteuerung oder Regelung von Stellelementen usw. ausgeführt wird. Des Weiteren sind bevorzugt eine gemeinsame Steuerkonsole, die alle durch den Anwender bedienbare Stellorgane umfasst und / oder eine Anzeige für alle dem Anwender anzuzeigenden, auswählbare oder einstellbare Parameter oder Betriebszustände vorgesehen.

## Patentansprüche

1. Vorrichtung zur Modifikation der Oberflächenaktivität (1) von zumindest Teilen von Oberflächen (2, 2A - 2D), insbesondere von zumindest Teilen von Oberflächen medizinischer Instrumente (3) mittels Flammenpyrolyse mit einer Beflammungsvorrichtung (4) zur Erzeugung einer Flamme (19) mit einem oxidierenden Flammenbereich (5) und einem reduzierenden Flammenbereich (6) und mit einer Vorrichtung (7) zur Beflammung des zu beflammenden Oberflächenteils (2, 2A - 2D) im Wesentlichen mit dem oxidierenden Flammenbereich (5).

2. Vorrichtung zur Modifikation der Oberflächenaktivität (1) nach Anspruch 1, **gekennzeichnet durch**
eine Halte- oder Stützvorrichtung (8) für den zu beflammenden Oberflächenteil (2, 2A - 2D).

3. Vorrichtung zur Modifikation der Oberflächenaktivität (1) nach einem der vorhergehenden Ansprüche, **dadurch gekennzeichnet, dass**
die Halte- oder Stützvorrichtung (8) und / oder die Beflammungsvorrichtung (4) relativ zueinander beweglich angeordnet sind.

4. Vorrichtung zur Modifikation der Oberflächenaktivität (1) nach Anspruch 3, **gekennzeichnet durch**
zumindest eine Antriebseinheit zur Bewegung der Halte- oder Stützvorrichtung (8) und / oder der Beflammungsvorrichtung (4).

5. Vorrichtung zur Modifikation der Oberflächenaktivität (1) nach einem der vorhergehenden Ansprüche, **dadurch gekennzeichnet, dass**
die Vorrichtung (7) zur Beflammung des zu beflammenden Oberflächenteils (2, 2A - 2D) im Wesentlichen mit dem oxidierenden Flammenbereich (5) zumindest einen Adapter (20, 20', 30) zur Positionierung des zu beflammenden Oberflächenteils (2, 2A - 2D) in der Reaktionszone (9) umfasst, wobei der Adapter (20, 20', 30) mit dem zu beflammenden Oberflächenteil (2, 2A - 2D) lösbar verbindbar und zwischen der Beflammungsvorrichtung (4) und der Halte- oder Stützvorrichtung (8) anordenbar ist.

6. Vorrichtung zur Modifikation der Oberflächenaktivität (1) nach einem der vorhergehenden Ansprüche, **dadurch gekennzeichnet, dass**
die Vorrichtung (7) zur Beflammung des zu beflammenden Oberflächenteils (2, 2A - 2D) im Wesentlichen mit dem oxidierenden Flammenbereich (5) eine Steuer- und / oder Regelvorrichtung umfasst.

7. Vorrichtung zur Modifikation der Oberflächenaktivität (1) nach Anspruch 6, **dadurch gekennzeichnet, dass**
die Steuer- und / oder Regelvorrichtung eine Stelleinrichtung (10), insbesondere ein Durchfluss- oder Druckregelelement zur gleichmäßigen Brenngaszufuhr zur Beflammungsvorrichtung (4) umfasst.

8. Vorrichtung zur Modifikation der Oberflächenaktivität (1) nach einem Ansprüche 6 oder 7, **dadurch gekennzeichnet, dass**
die Steuer- und / oder Regelvorrichtung zumindest einen Schalter (18) oder einen Sensor, insbesondere einen Drucksensor zur Bestimmung des Brenngasdrucks, einen Temperatursensor, einen optischen Sensor zur Unterscheidung des oxidierenden Flammenbereichs (5) und des reduzierenden Flammenbereichs (6) oder einen Abstandsensor umfasst.

9. Vorrichtung zur Modifikation der Oberflächenaktivität (1) nach Anspruch 8, **gekennzeichnet durch**
eine mit dem Schalter (18) oder Sensor verbindbare oder verbundene Auswerteinheit zur Verarbeitung eines vom Schalter (18) oder Sensor erzeugbaren Signals und zur Abgabe eines Stellsignals an ein Stellglied.

10. Vorrichtung zur Modifikation der Oberflächenaktivität (1) nach Anspruch 9, **dadurch gekennzeichnet, dass**
das Stellglied eine Antriebseinheit zum Bewegen der Halte- oder Stützvorrichtung (8) und / oder zum Bewegen der Beflammungsvorrichtung (4) umfasst.

11. Vorrichtung zur Modifikation der Oberflächenaktivität (1) nach einem der vorhergehenden Ansprüche, **gekennzeichnet durch**
eine Zündvorrichtung (11), die zum Zünden der Flamme (19) der Beflammungsvorrichtung (4) während oder nach dem Einbringen zumindest eines Teils der zu beflammenden Oberfläche (2, 2A-2D) in die Reaktionszone (9) ausgebildet ist.

12. Vorrichtung zur Modifikation der Oberflächenaktivität (1) nach einem der vorhergehenden Ansprüche, **gekennzeichnet durch**
eine Zeitschaltung zur zeitlichen Begrenzung der Beflammung des zu beflammenden Oberflächenteils (2, 2A - 2D) auf ein vorgegebenes oder einstellbares Zeitintervall.

13. Vorrichtung zur Modifikation der Oberflächenaktivität (1) nach einem der vorhergehenden Ansprüche, **gekennzeichnet durch**
eine Schutzeinrichtung, die so ausgebildet ist, dass die Oberfläche (2, 2A - 2D) nach der Beflammung erst nach Unterschreiten einer vorgegebenen oder einstellbaren Temperaturgrenze aus der Vorrichtung zur Modifikation der Oberflächenaktivität (1) entnehmbar ist, wobei die Schutzeinrichtung bevorzugt zeit- oder temperaturgesteuert ist.

14. Vorrichtung zur Modifikation der Oberflächenaktivität (1) nach einem der vorhergehenden Ansprüche, **gekennzeichnet durch**
eine mit der Beflammungsvorrichtung (4) verbindbare oder verbundene Quelle (12) für zumindest eine (halb)metallorganische Verbindung, insbesondere einer Silizium-, Titan- oder Aluminiumverbindung.

15. Vorrichtung zur Modifikation der Oberflächenaktivität (1) nach einem der vorhergehenden Ansprüche, **gekennzeichnet durch**
eine die Vorrichtung zur Modifikation der Oberflächenaktivität (1) tragende Plattform oder ein die Vorrichtung zur Modifikation der Oberflächenaktivität (1) zumindest teilweise umschließendes Gehäuse (13).

16. Vorrichtung zur Modifikation der Oberflächenaktivität (1) nach einem der vorhergehenden Ansprüche, **gekennzeichnet durch**
eine Beflammungsvorrichtung (4) zur Erzeugung einer Flamme (19) oder Flammenfront, deren Breite zumindest etwa gleich ihrer Höhe ist.
